# EUROPÄISCHE PATENTSCHRIFT

(11) **EP 1 620 978 B1**
(45) Veröffentlichungstag und Bekanntmachung des Hinweises auf die Patenterteilung: **23.10.2013**
(21) Anmeldenummer: 04717079.0
(22) Anmeldetag: 04.03.2004
(51) Int. Cl.: H04W 24/00

(54) **Verfahren und Tester zum bestimmen einer Fehlerrate eines Mobilfunkgeräts, insbesondere für USF-BLER**
Method and tester for determining an error rate of a mobile radio device, especially for USF-BLER
Procédé et testeur pour déterminer un taux d'erreurs pour un appareil de téléphonie mobile, notamment un USF-BLER

(30) Priorität: 08.05.2003 DE 10320670
(43) Veröffentlichungstag der Anmeldung: 01.02.2006
(73) Patentinhaber: Rohde & Schwarz GmbH & Co. KG, 81671 München (DE)
(72) Erfinder: PLAUMANN, Ralf, 85659 Forstern (DE); FÜSSLE, Jörg, 85586 Poing (DE); SEELBACH, Peter, 85579 Neubiberg (DE)
(74) Vertreter: Körfer, Thomas
(86) Internationale Anmeldenummer: PCT/EP2004/002219
(87) Internationale Veröffentlichungsnummer: WO 2004/100459

(56) Entgegenhaltungen:
- RICHARD MACQUIRE: "MONITORING GPRS PERFORMANCE" TELECOMMAGAZINE, [Online] 1. Februar 2002 (2002-02-01), Seiten 1-3, XP002303572 Gefunden im Internet: URL:http://www.telecommagazine.com/article s> [gefunden am 2004-11-01]
- "Agilent Technologies 8960 Series 10 Wireless Communications Test Set; Reference Guide"[Online] 1. Februar 2003 (2003-02-01), Seite 1-32,149,213, XP002303573 Gefunden im Internet: URL:http://wireless.agilent.com/find/8960> [gefunden am 2004-11-01]
- "Uplink State Flag (USF) BLER" E1968A E6701C E6704A ONLINE USER'S GUIDE, [Online] 4. Juni 2003 (2003-06-04), Seiten 1-1, XP002303574 Gefunden im Internet: URL:http://wireless.agilent.com/rfcomms/re fdocs/gtsmgprs/gprsla_usf_bler.php> [gefunden am 2004-11-01]
- "Uplink State Flag (USF)" E1968A E6701C E6704A ONLINE USER'S GUIDE, [Online] 12. Juni 2003 (2003-06-12), Seiten 1-1, XP002303575 Gefunden im Internet: URL:http://wireless.agilent.com/rfcomms/re fdocs/gsmgprs/gprsla_pe_usf.php> [gefunden am 2004-11-01]

## Beschreibung

Die Erfindung betrifft ein Verfahren und einen Tester zum Bestimmen einer Fehlerrate eines Mobilfunkgeräts bei einer Erkennung eines Zuordnungssignals.

Zur Erhöhung der Übertragungskapazität eines Mobilfunksystems ist es bekannt, einen Übertragungskanal für mehrere Mobilfunkteilnehmer bzw. Mobilfunkgeräte zu verwenden. Innerhalb dieses einen Übertragungskanals wird den Mobilfunkgeräten durch eine Basisstation mitgeteilt, welches der mehreren Mobilfunkgeräte zu welchem Zeitpunkt mit der Basisstation kommuniziert.

Beispielsweise wird in jeweils einem Übertragungsblock, welcher von der Basisstation gesendet wird, mit Hilfe eines Zuordnungssignals, eines sogenannten "USF" (Uplink state Flag), festgelegt, welches der in demselben Übertragungskanal mit der Basisstation kommunizierenden Mobilfunkgeräte während des nächsten Übertragungsblocks an die Basisstation senden kann. Eine solche flexible Zuordnung ist beispielsweise in der EP 1 139 614 A1 beschrieben. Der Übertragungskanal, der aus einer Reihe von aufeinanderfolgenden Übertragungsblöcken besteht, wird dabei durch bis zu acht Teilnehmer genutzt.

Das Dokument RICHARD MACQUIRE: "MONITORING GPRS PERFORMANCE", TELECOMMAGAZINE , 1. Februar 2002 (2002-02-01), Seiten 1-3, offenbart eine Blockfehlerratenbestimmung anhand von teilweise korrumpierten USFs (Uplink State Flags).

Damit ein solches System, welches gegenüber einer festen Zuweisung eines Übertragungskanals zu einem Teilnehmer eine erhebliche Verbesserung in der Ausnutzung der Übertragungskapazität des Übertragungskanals bietet, einen reibungslosen Ablauf sicherstellen kann, ist es erforderlich, dass die Zuordnung durch die Mobilfunkgeräte mit einer erheblichen Sicherheit erfolgt. Mobilfunkgeräte sind dabei alle Endgeräte, die mit der Basisstation kommunizieren. Während bei einem Nichterkennen eines solchen Zuordnungssignals durch ein Mobilfunkgerät nur ein Teil der möglichen Übertragungskapazität ungenutzt bleibt, entstehen bei einer falschen Erkennung durch ein Mobilfunkgerät weit größere Schwierigkeiten, da in einem nachfolgenden Übertragungsblock in diesem Fall zumindest zwei Mobilfunkgeräte gleichzeitig an die Basisstation senden und damit die übermittelte Information unter Umständen nicht mehr auswertbar ist.

Bei der Entwicklung von Mobilfunkgeräten sowie der Überprüfung von Geräten in der Produktion ist es erforderlich, die Anzahl der nicht erkannten Zuordnungen festzustellen und in Relation zu der Zahl der insgesamt empfangenen Zuordnungssignale zu setzen. Für eine so bestimmte Fehlerrate (BLER, Block Error Rate) ist in der Spezifikation beispielsweise für ein EGPRS-System eine zulässige Höchstgrenze von einem Prozent festgelegt.

Der Erfindung liegt die Aufgabe zugrunde, ein Verfahren sowie einen Tester zum Ermitteln einer Fehlerrate zu schaffen, welche eine praxisnahe Bestimmung der Fehlerrate erlaubt.

Die Aufgabe wird durch das erfindungsgemäße Verfahren nach Anspruch 1 sowie den erfindungsgemäßen Tester nach Anspruch 9 gelöst.

Bei dem erfindungsgemäßen Verfahren wird zur Bestimmung der Fehlerrate des Mobilfunkgeräts bei der Erkennung eines Zuordnungssignals zunächst ein Übertragungsblock an das Mobilfunkgerät gesendet, wobei in dem Übertragungsblock ein Zuordnungssignal enthalten ist. Das zu testende Mobilfunkgerät empfängt das Signal einschließlich des darin enthaltenen Zuordnungssignals und überprüft die Adressierung des Zuordnungssignals. Wird dabei von dem Mobilfunkgerät festgestellt, dass das Zuordnungssignal das Mobilfunkgerät selbst adressiert, so wird in dem nachfolgenden Übertragungsblock von diesem Mobilfunkgerät ein Nachrichtensignal an die Basisstation gesendet. Umgekehrt sendet das zu testende Mobilfunkgerät genau dann kein Nachrichtensignal während des nachfolgenden Übertragungsblocks, wenn bei der Überprüfung des in dem empfangenen Übertragungsblock enthaltenen Zuordnungssignals kein Zuordnungssignal erkannt wird, welches dieses Mobilfunkgerät adressiert. Für das zu testende Mobilfunkgerät ist dieses Ergebnis gleichbedeutend damit, dass durch das Zuordnungssignal ein anderes Mobilfunkgerät desselben Übertragungskanals adressiert wird und daher das zu testende Mobilfunkgerät in dem nachfolgenden Übertragungsblock nicht senden darf.

Zur Bestimmung der Qualität der Erkennung des Zuordnungssignals durch das Mobilfunkgerät wird die Anzahl derjenigen Übertragungsblöcke ermittelt, in denen das zu testende Mobilfunkgerät hätte senden müssen, jedoch von dem zu testenden Mobilfunkgerät kein Nachrichtensignal gesendet wurde. Um zu verhindern, dass lediglich Zuordnungssignale verwendet werden, welche das zu testende Mobilfunkgerät adressieren, wird erfindungsgemäß außerdem das zu sendende Zuordnungssignal aus zumindest zwei verschiedenen Zuordnungssignalen ausgewählt, wobei eines dieser Zuordnungssignale das zu testende Mobilfunkgerät adressiert und dass zumindest eine weitere Zuordnungssignal ein anderes Mobilfunkgerät desselben Übertragungskanals adressiert. Mit dieser Auswahl aus zumindest zwei sich unterscheidenden Zuordnungssignalen wird es für das Mobilfunkgerät schwieriger, eine Sequenz von ankommenden Zuordnungssignalen als Test zu identifizieren, womit das Testergebnis eher mit den realen Einsatzbedingungen vergleichbar ist.

Die Unteransprüche betreffen vorteilhafte Weiterbildungen des erfindungsgemäßen Verfahrens sowie des erfindungsgemäßen Testers.

Insbesondere ist es vorteilhaft, nicht nur zu ermitteln, wie groß die Fehlerrate hinsichtlich eines Zuordnungssignals ist, das das zu testende Mobilfunkgerät betrifft, sondern auch, wie groß die Rate einer falschen Erkennung von Zuordnungssignalen ist, welche ein anderes Mobilfunkgerät desselben Übertragungskanals adressieren. Aufgrund der Verwendung von zumindest zwei Zuordnungssignalen, die einerseits das zu testende Mobilfunkgerät und andererseits ein weiteres, denselben Übertragungskanal nutzendes Mobilfunkgerät adressieren, ist es möglich, beide Fehlerraten gleichzeitig zu bestimmen.

Damit wird nicht nur die Handhabung des Testers bzw. die Durchführung des Verfahrens zum Ermitteln einer Fehlerrate vereinfacht, sondern zugleich auch ein Test durchgeführt, welcher verbessert an die realen Einsatzbedingungen eines Mobilfunkgeräts angepasst ist und der daher ein besonders aussagekräftiges Messergebnis liefert.

Gemäß einer anderen vorteilhaften Ausgestaltung des erfindungsgemäßen Verfahrens und des erfindungsgemäßen Testers steht die Anzahl der gesendeten Zuordnungssignale, die das zu testende Mobilfunkgerät adressieren, in einem bestimmten Verhältnis zur insgesamt gesendeten Anzahl an Zuordnungssignalen, wobei das Verhältnis vorzugsweise durch den Bediener festgelegt werden kann.

Das erfindungsgemäße Verfahren sowie der erfindungsgemäße Tester werden anhand der Zeichnung in der nachfolgenden Beschreibung näher erläutert. Es zeigen:
- Fig. 1: eine schematische Darstellung der Bildung von Übertragungsblöcken in einem Mobilfunksystem,
- Fig. 2: eine schematische Darstellung des zeitlichen Ablaufs bei der Übertragung mehrerer Übertragungsblöcke mit Zuordnungssignalen,
- Fig. 3: eine schematische Darstellung eines Mobilfunksystems mit mehreren Mobilfunkgeräten eines Übertragungskanals, und
- Fig. 4: ein Blockschaltbild eines Testers zum Ermitteln einer Fehlerrate eines Mobilfunkgeräts.

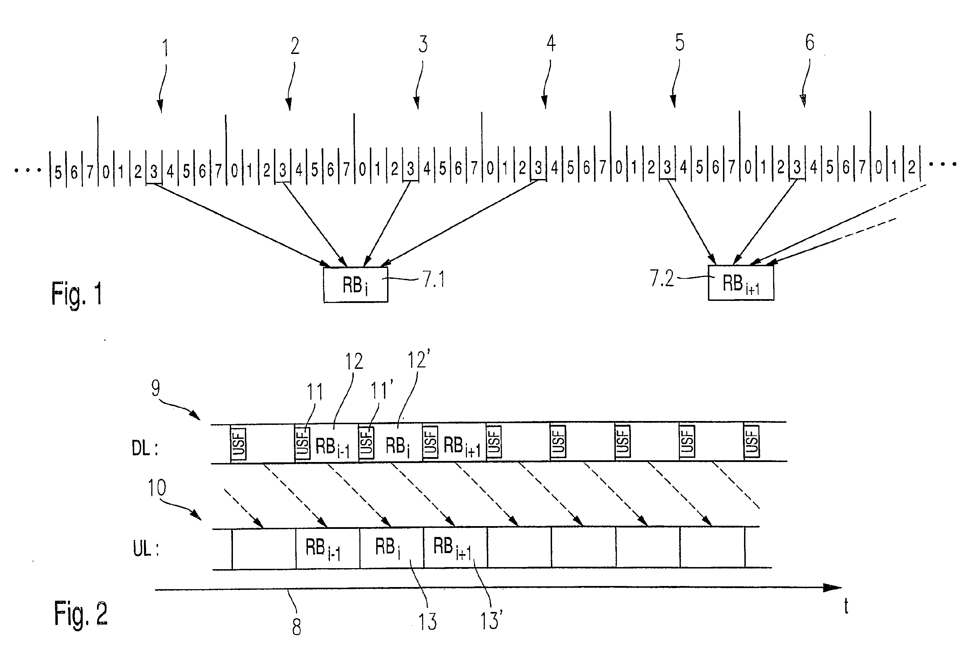

In Fig. 1 ist beispielhaft dargestellt, wie die Übertragung von Nachrichtensignalen in einem Mobilfunksystem abläuft. Zur Übertragung von Nachrichtensignalen werden beispielsweise bei EGPRS (Enhanced General Packet Radio System) Mobilfunksystemen sich zeitlich wiederholende feste Strukturen verwendet. In der Fig. 1 ist dies in dem dargestellten Zeitausschnitt durch sechs aufeinanderfolgende Rahmen (frames) 1 bis 6 dargestellt.

Innerhalb eines solchen Rahmens sind wiederum zeitliche Unterteilungen vorgesehen, so dass jeder der Rahmen 1 bis 6 aus Zeitschlitzen (slots) mit den Nummern 0 bis 7 zusammengesetzt ist. Die Kommunikation zwischen beispielsweise eine Basisstation (base station) und einem Teilnehmer (subscriber) mit einem Mobilfunkgerät (subscriber equipment) erfolgt jeweils in einem bestimmten der Zeitschlitze 0 bis 7 eines Rahmens 1 bis 6.

Eine bestimmte Nummer eines Zeitschlitzes 0 bis 7 aller aufeinanderfolgender Rahmen 1 bis 6 und der weiteren Rahmen, die in der Fig. 1 nicht dargestellt sind, bildet dabei einen Übertragungskanal, innerhalb dessen ein Signal zwischen einem Mobilfunkgerät und einer Basisstation übertragen werden kann. Die Übertragung von Informationen zwischen einem Mobilfunkgerät und der Basisstation erfolgt dabei in Übertragungsblöcken 7.1 und 7.2, wobei jeder dieser Übertragungsblöcke aus vier entsprechenden Zeitschlitzen von vier aufeinanderfolgenden Rahmen 1 bis 6 besteht.

In der Darstellung der Fig. 1 wird also der Übertragungsblock 7.1 (RBᵢ) jeweils aus den Zeitschlitzen mit der Nummer 3 in den aufeinanderfolgenden Rahmen 1, 2, 3 und 4 gebildet. Beginnend mit dem Zeitschlitz der Nummer 3 in Rahmen 5 wird der nächste Übertragungsblock 7.2 (RBᵢ₊₁) desselben Übertragungskanals begonnen. Zu diesem nächsten Übertragungsblock 7.2 (RBᵢ₊₁) ist in der Fig. 1 noch der Zeitschlitz mit der Nummer 3 des Rahmens 6 dargestellt, die Zugehörigkeit von zwei weiteren Zeitschlitzen mit der Nummer 3 zweier weiterer Rahmen ist mit den gestrichelten Pfeilen angedeutet.

Um eine optimale Ausnutzung der Übertragungskapazität eines Übertragungskanals zu gewährleisten, können aufeinander folgende Übertragungsblöcke eines Übertragungskanals durch verschiedene Teilnehmer bzw. Mobilfunkgeräte genutzt werden. Dabei wird ausgenutzt, das zur Übertragung von einfachen Informationen, wie beispielsweise Sprachsignalen, nicht die Kapazität eines ganzen Übertragungskanals erforderlich ist. Es werden daher mehrere Mobilfunkgeräte in einem Übertragungskanal gemeinsam betrieben, wobei die einzelnen Übertragungsblöcke jeweils genau einem Mobilfunkgerät zugeordnet werden. Durch diese Zuordnung wird verhindert, dass sich überlagernde Nachrichtensignale von zwei oder mehr Mobilfunkgeräten ergeben.

Der zeitliche Ablauf sowie die Zuordnungen der einzelnen Übertragungsblöcke zu den Mobilfunkteilnehmern ist stark vereinfacht in Fig. 2 dargestellt. Fig. 2 zeigt dabei bezüglich einer Zeitachse 8 ein Downlink-Signal (DL) 9, das aus mehreren aufeinanderfolgenden Übertragungsblöcken besteht. Weiterhin ist in der Fig. 2 ein Uplink-Signal (UL) 10 gezeigt, das ebenfalls aus mehreren aufeinanderfolgenden Übertragungsblöcken besteht.

Das Downlink-Signal 9 ist ein Signal, welches von einer Basisstation an ein Mobilfunkgerät gesendet wird. Das Uplink-Signal 10 wird dagegen von einem Mobilfunkgerät an die Basisstation gesendet. Um festzulegen, welches der Mobilfunkgeräte in einem nachfolgenden, vorzugsweise dem nächsten, Übertragungsblock mit der Basisstation kommunizieren kann, ist in jedem der Übertragungsblöcke des Downlink-Signals 9 ein Zuordnungssignal 11 (USF) enthalten, welches eines der Mobilfunkgeräte desselben Übertragungskanals adressiert. Die Mobilfunkgeräte desselben Übertragungskanals werten dieses Zuordnungssignal 11 aus, welches zum Beispiel in dem mit dem Bezugszeichen 12 bezeichneten Übertragungsblock gesendet wird.

Während des darauf folgenden Übertragungsblocks 13 sendet dann dasjenige Mobilfunkgerät an die Basisstation ein Nachrichtensignal, welches durch das Zuordnungssignal 11 des Übertragungsblocks 12 (RBᵢ₋₁) adressiert wurde. Ein nachfolgender Übertragungsblock 12' (RBᵢ) des Downlink-Signals 9 enthält wiederum ein Zuordnungssignal 11', mit dem ein Mobilfunkgerät für den nachfolgenden Übertragungsblock 13' (RBᵢ₊₁) des Uplink-Signals 10 adressiert wird. Die beiden Zuordnungssignale 11 und 11' können dabei entweder dasselbe Mobilfunkgerät oder verschiedene Mobilfunkgeräte desselben Übertragungskanals adressieren.

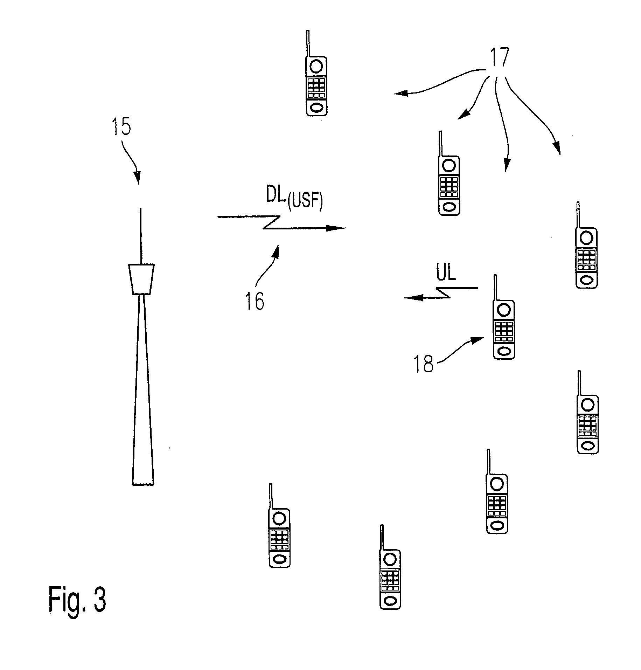

Der reale Betrieb eines solchen Mobilfunksystems ist stark vereinfacht in Fig. 3 dargestellt. In den Übertragungsblöcken, die von einer Basisstation 15 als Downlink-Signal 16 gesendet werden, ist jeweils ein Zuordnungssignal (USF) enthalten, mit dem eines der Mobilfunkgeräte 17, die denselben Übertragungskanal nutzen, adressiert wird. Erkennt beispielsweise das Mobilfunkgerät 18 beim Auswerten des zuletzt gesendeten Zuordnungssignals, dass es adressiert wurde, so sendet es in dem darauf folgenden Übertragungsblock ein Nachrichtensignal an die Basisstation 15. Aufgrund der Belegung eines Übertragungskanals mit beispielsweise bis zu acht Mobilfunkgeräten ist eine exakte Auswertung der gesendeten Zuordnungssignale von großer Wichtigkeit für das reibungslose Funktionieren des Systems, weswegen z. B. eine Fehlerrate von weniger als ein Prozent (1 %) bei vorgegebenem Referenzpegel für das Erkennen eines Zuordnungssignals durch das Mobilfunkgerät durch den Standard für EGPRS gefordert ist.

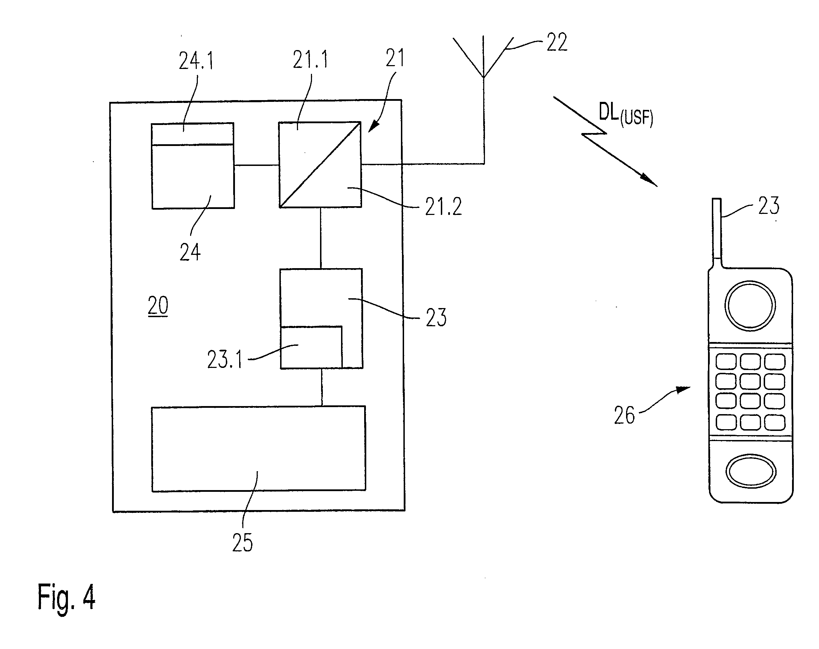

Zum Ermitteln dieser Fehlerrate wird in dem Übertragungsblock 12 (REᵢ₋₁) in Fig. 2 das Zuordnungssignal 11 gesendet, welches entweder das Mobilfunkgerät adressiert, für welches die Fehlerrate ermittelt werden soll, oder ein anderes Mobilfunkgerät, das jedoch zu demselben Übertragungskanal gehört. Wird mit dem Zuordnungssignal 11 das zu testende Mobilfunkgerät adressiert, so wird für den darauf folgenden Übertragungsblock 13 (RBᵢ) des Uplink-Signals 10 durch einen Tester, wie er in Fig. 4 dargestellt ist, ermittelt, ob das zu testende Mobilfunkgerät ein Nachrichtensignal gesendet hat. Zum Ermitteln der Fehlerrate wird die Anzahl derjenigen Übertragungsblöcke bsetimmt, in denen durch das zu testende Mobilfunkgerät ein Nachrichtensignal hätte übermittelt werden müssen, da in dem vorangegangenen Übertragungsblock des Downlink-Signals 9 das zu testende Mobilfunkgerät durch das Zuordnungssignal adressiert wurde.

Aus dieser Anzahl der nicht erkannten Zuordnungssignale, welche das zu testende Mobilfunkgerät adressieren, wird eine erste Fehlerrate bestimmt, indem die Anzahl der nicht erkannten Zuordnungssignale ins Verhältnis zur Anzahl der das zu testende Mobilfunkgerät adressierenden Zuordnungssignale gesetzt wird.

Vor dem Senden des nächsten Übertragungsblocks 12' (RBᵢ) des Downlink-Signals 9 wird zunächst bestimmt, ob das in dem nächsten Übertragungsblock 12' (RBᵢ) enthaltene Zuordnungssignal 11' das zu testende Mobilfunkgerät oder ein anderes Mobilfunkgerät desselben Übertragungskanals adressieren soll. Bei dieser Entscheidung, welches Zuordnungssignal als Nächstes gesendet wird, kann auch berücksichtigt werden, wie viele das zu testende Mobilfunkgerät adressierende Zuordnungssignale bereits gesendet wurden, oder, ob das zuletzt gesendete Zuordnungssignal das zu testende Mobilfunkgerät adressierte oder nicht.

Bei der Auswahl des zu sendenden Zuordnungssignals können auch weitere Auswahlkriterien bestimmt werden.

Wird in dem nächsten Übertragungsblock 12' (RBᵢ) des Downlink-Signals 9 ein Zuordnungssignal 11' gesendet, welches nicht das zu testende Mobilfunkgerät adressiert, so wird für den nachfolgenden Übertragungsblock 13' (RBᵢ₊₁) des Uplink-Signals 10 bestimmt, ob das zu testende Mobilfunkgerät ein Nachrichtensignal gesendet hat. Dabei wird die Anzahl derjenigen Übertragungsblöcke ermittelt, in denen durch das zu testende Mobilfunkgerät ein Nachrichtensignal gesendet wurde, obwohl in dem vorangegangenen Übertragungsblock des Downlink-Signals 9 ein anderes Mobilfunkgerät adressiert wurde.

Aus der Anzahl dieser falsch erkannten Zuordnungssignale wird analog zu der ersten Fehlerrate eine zweite Fehlerrate ermittelt. Vorzugsweise erfolgt diese Ermittlung der ersten und der zweiten Fehlerrate nicht durch zwei getrennt und nacheinander durchgeführte Messungen, sondern durch Auswerten der Übertragungsblöcke des Uplink-Signals 10 unter Berücksichtigung der jeweils in dem vorangegangenen Übertragungsblock des Downlink-Signals 9 enthaltenen Zuordnungssignale.

Besonders bevorzugt erfolgt die Auswahl des nächsten zu sendenden Zuordnungssignals nicht nur anhand des Zuordnungssignals, welches das zu testende Mobilfunkgerät adressiert und einem weiteren Zuordnungssignal, sondern aus der vollständigen Gruppe von Zuordnungssignalen, mit denen sich alle Mobilfunkgeräte, welche denselben Übertragungskanal verwenden, adressieren lassen.

In Fig. 4 ist stark vereinfacht ein Blockschaltbild eines erfindungsgemäßen Testers 20 dargestellt. Der Tester 20 umfasst eine Sende-/Empfangsvorrichtung 21 die mit einer Antenne 22 verbunden ist. Über die Antenne 22 wird einerseits das Downlink-Signal 9 gesendet und andererseits das Uplink-Signal 10 empfangen. Zum Senden bzw. Empfangen besteht die Sende-/Empfangsvorrichtung 21 aus einer Sendeeinheit 21.1 und einer Empfangseinheit 21.2.

Mit der Sende-/Empfangsvorrichtung 21 ist eine Auswertevorrichtung 23 verbunden, in welcher sowohl die Anzahl der nicht erkannten Zuordnungssignale, die das zu testende Mobilfunkgerät adressieren, als auch die Anzahl der falsch erkannten Zuordnungssignale, welche andere als das zu testende Mobilfunkgerät adressieren, ermittelt werden.

Die Auswertevorrichtung 23 enthält ferner Mittel 23.1, um aus der Anzahl der nicht erkannten Zuordnungssignale bzw. der falsch erkannten Zuordnungssignale eine erste bzw. zweite Fehlerrate zu bestimmen. Die in der Auswertevorrichtung 23 ermittelte erste Fehlerrate und/oder die zweite Fehlerrate werden auf einer Darstellungseinrichtung 25, welche mit der Auswertevorrichtung 23 verbunden ist, angezeigt. Die Anzeige kann sowohl grafisch als auch in Textform erfolgen.

Die jeweils in einem Übertragungsblock des Downlink-Signals 9 von der Sendeeinrichtung 21.1 zu sendenden Zuordnungssignale werden von einer Auswahleeinrichtung 24 bestimmt. Von der Auswahleeinrichtung 24 kann bei der Auswahl des nächsten zu sendenden Zuordnungssignals berücksichtigt werden, welche Zuordnungssignale zuletzt gesendet wurden. Im einfachsten Fall wird dabei jeweils nur das zuletzt gesendete Zuordnungssignal berücksichtigt.

Hierzu kann beispielsweise in der Auswahleeinrichtung 24 gespeichert werden, welches Zuordnungssignal gesendet wird, wobei jedes neu ausgewählte Zuordnungssignal zusätzlich in einem Speicherbereich 24.1 abgelegt wird. Die Einträge in dem Speicherbereich 24.1 werden dann bei der Auswahl eines neuen Zuordnungssignals durch die Auswahleeinrichtung 24 berücksichtigt.

Bei der Durchführung des erfindungsgemäßen Verfahrens wird jeweils ein Übertragungsblock mit einem Zuordnungssignal durch die Antenne 22 des Testers 20 gesendet, wobei dieses Sendesignal von dem zu testenden Mobilfunkgerät 26 mittels dessen Antenne 23 empfangen wird. Das in dem empfangenen Signal enthaltene Zuordnungssignal wird von dem Mobilfunkgerät 26 ausgewertet. Wird bei dieser Auswertung erkannt, dass das Mobilfunkgerät 26 durch das Zuordnungssignal adressiert wurde, so wird in dem darauf folgenden Übertragungsblock des Uplink-Signals 10 ein Nachrichtensignal von dem Mobilfunkgerät 26 über die Antenne 23 gesendet.

In schon beschriebener Weise wird das Senden eines Nachrichtensignals von dem Tester 20 ausgewertet, wobei unterschieden wird, zwischen einem korrekt erkannten Zuordnungssignal, einem falsch erkannten Zuordnungssignal und einem nicht erkannten Zuordnungssignal. Die Verwendung von Zuordnungssignalen zur Zuordnung von mehreren Teilnehmern zu Übertragungsblöcken eines Übertragungskanals ist nicht auf das in Fig. 1 dargestellte TDMA-Schema (Time Division Multiple Access) beschränkt, sondern kann für jedes System verwendet werden, in dem eine blockweise Zuordnung der Teilnehmer bei der Übertragung von Nachrichten erfolgt. Insbesondere ist das gleichzeitige Auswerten von nicht erkannten und falsch erkannten Zuordnungssignalen auch in anderen Mobilfunksystemen möglich.

## Patentansprüche

1. Verfahren zum Bestimmen einer Fehlerrate eines Mobilfunkgeräts (18) bei einer Erkennung eines Zuordnungssignals (11, 11') zum Zuordnen eines von mehreren Mobilfunkgeräten (17) desselben Übertragungskanals zu einem nachfolgenden Übertragungsblock (13, 13') des Übertragungskanals mit folgenden Verfahrensschritten:
- Senden eines Übertragungsblocks (12, 12') mit einem Zuordnungssignal (11, 11'),
- Empfangen des Zuordnungssignals (11, 11') durch das zu testende Mobilfunkgerät (26),
- Ermitteln durch das zu testende Mobilfunkgerät (26), ob ihm durch das empfangene Zuordnungssignal (11, 11') der nachfolgende Übertragungsblock (13, 13') zugeordnet ist,
- Senden eines Nachrichtensignals in dem nachfolgenden Übertragungsblock (13, 13') durch das zu testende Mobilfunkgerät (26), bei festgestellter Zuordnung,
- Empfangen des Nachrichtensignals des zu testenden Mobilfunkgeräts (26) in dem entsprechenden Übertragungsblock (13, 13'),
- Überprüfen, ob nach einem Zuordnungssignal (11, 11'), das das zu testende Mobilfunkgerät (26) adressiert, ein Nachrichtensignal in dem nachfolgenden Übertragungsblock (13, 13') von dem zu testenden Mobilfunkgerät (26) empfangen wurde,
- Bestimmen der Anzahl der nicht erkannten, das zu testende Mobilfunkgerät adressierenden Zuordnungssignale (11, 11'), **dadurch gekennzeichnet, dass** das zu sendende Zuordnungssignal (11, 11') aus einem das zu testende Mobilfunkgerät (26) adressierenden Zuordnungssignal und zumindest einem weiteren, ein anderes Mobilfunkgerät desselben Übertragungssignals adressierendes Zuordnungssignal ausgewählt wird.

2. Verfahren nach Anspruch 1,
**dadurch gekennzeichnet,**
**dass** aus der Anzahl der nicht erkannten, das zu testende Mobilfunkgerät (26) adressierenden Zuordnungssignale eine erste Fehlerrate bestimmt wird.

3. Verfahren nach Anspruch 1 oder 2,
**dadurch gekennzeichnet,**
**dass** die Anzahl der durch das zu testende Mobilfunkgerät (26) falsch als Zuordnung erkannten Zuordnungssignale, die andere Mobilfunkgeräte desselben Übertragungskanals adressieren, bestimmt wird.

4. Verfahren nach Anspruch 3,
**dadurch gekennzeichnet,**
**dass** aus der Anzahl der falsch als Zuordnung erkannter Zuordnungssignale, die andere Mobilfunkgeräte (17) desselben Übertragungskanals adressieren, eine zweite Fehlerrate bestimmt wird.

5. Verfahren nach Anspruch 1,
**dadurch gekennzeichnet,**
**dass** die Anzahl der durch das zu testende Mobilfunkgerät (26) falsch als Zuordnung erkannten Zuordnungssignale, die andere Mobilfunkgeräte (17) desselben Übertragungskanals adressieren, bestimmt wird und
**dass** aus der Anzahl der nicht erkannten, das zu testende Mobilfunkgerät (26) adressierenden Zuordnungssignale eine erste Fehlerrate und aus der Anzahl der falsch als Zuordnung erkannten Zuordnungssignale eine zweite Fehlerrate bestimmt wird.

6. Verfahren nach einem der Ansprüche 1 bis 5,
**dadurch gekennzeichnet,**
**dass** das Zuordnungssignal zur Zuordnung eines Mobilfunkgeräts (17) zu einem nachfolgenden Übertragungsblock aus den Zuordnungssignalen aller Mobilfunkgeräte (17) ausgewählt wird, die denselben Übertragungskanal nutzen.

7. Verfahren nach einem der Ansprüche 1 bis 6,
**dadurch gekennzeichnet,**
**dass** die Anzahl der gesendeten Zuordnungssignale, die das zu testende Mobilfunkgerät (26) adressieren, in einem bestimmbaren Verhältnis zu der Anzahl der insgesamt gesendeten Zuordnungssignale (11, 11') steht.

8. Verfahren nach einem der Ansprüche 1 bis 7,
**dadurch gekennzeichnet,**
**dass** die Auswahl des den nächsten Übertragungsblock betreffenden Zuordnungssignals (11') in Abhängigkeit von zumindest dem zuletzt vorher gesendeten Zuordnungssignal (11) erfolgt.

9. Tester zum Bestimmen einer Fehlerrate eines Mobilfunkgeräts (26) bei der Erkennung eines Zuordnungssignals zum Zuordnen eines von mehreren Mobilfunkgeräten (18) desselben Übertragungskanals zu einem nachfolgenden Übertragungsblock des Übertragungskanals, wobei der Tester (20)
eine Sendeeinrichtung (21.1) zum Senden von Übertragungsblöcken (12, 12') mit einem Zuordnungssignal (11, 11'),
eine Empfangseinrichtung (21.2) zum Empfangen von in den nachfolgenden Übertragungsblöcken (13, 13') von dem zu testenden Mobilfunkgerät (26) gesendeten Nachrichtensignalen,
eine Auswerteeinrichtung (23) zum Bestimmen der Anzahl derjenigen einem Zuordnungssignal, das das zu testende Mobilfunkgerät, (26) adressiert, jeweils nachfolgenden Übertragungsblöcke, in denen das zu testende Mobilfunkgerät (26) kein Nachrichtensignal sendet und **gekennzeichnet durch**
eine Auswahleinrichtung (24) zum Auswählen der zu sendenden Zuordnungssignale (11, 11') aus zumindest dem das zu testende Mobilfunkgerät (26) adressierenden Zuordnungssignal und einem weiteren, ein anderes Mobilfunkgeräte (17) desselben Übertragungskanals adressierenden Zuordnungssignal umfasst.

10. Tester nach Anspruch 9,
**dadurch gekennzeichnet,**
**dass** die Auswerteeinrichtung (23) Mittel (23.1) zum Bestimmen einer ersten Fehlerrate aus der Anzahl der nicht erkannten, das zu testende Mobilfunkgerät (26) adressierenden Zuordnungssignale (11, 11') umfasst.

11. Tester nach Anspruch 9 oder 10,
**dadurch gekennzeichnet,**
**dass** die Auswerteeinrichtung (23) Mittel (23.1) zum Bestimmen der Anzahl der durch das zu testende Mobilfunkgerät (26) falsch als Zuordnung erkannten Zuordnungssignale (11, 11'), die andere Mobilfunkgeräte (17) desselben Übertragungskanals adressieren, umfasst.

12. Tester nach Anspruch 11,
**dadurch gekennzeichnet,**
**dass** die Auswerteeinrichtung (23) Mittel (23.1) zum Bestimmen einer zweiten Fehlerrate aus der Anzahl der falsch als Zuordnung erkannten Zuordnungssignale, die andere Mobilfunkgeräte (17) desselben Übertragungskanals adressieren, umfasst.

13. Tester nach einem der Ansprüche 9 bis 12,
**dadurch gekennzeichnet,**
**dass** die Auswahleinrichtung (24) zum Auswählen der zu sendenden Zuordnungssignale (11, 11') aus den Zuordnungssignalen aller Mobilfunkgeräte (17) desselben Übertragungskanals vorgesehen ist.

14. Tester nach einem der Ansprüche 9 bis 13,
**dadurch gekennzeichnet**,
das über die Auswahleinrichtung (24) das Verhältnis der gesendeten Zuordnungssignale, die das zu testende Mobilfunkgerät adressieren, zu dem insgesamt gesendeten Zuordnungssignalen (11, 11') bestimmbar ist.

15. Tester nach einem der Ansprüche 9 bis 14,
**dadurch gekennzeichnet**,
das über die Auswahleinrichtung (24) das den nächsten Übertragungsblock (13') betreffende Zuordnungssignal (11') in Abhängigkeit von zumindest dem zuletzt vorher gesendeten Zuordnungssignal (11) bestimmbar ist.

## Claims

1. Method for determining an error rate of a mobile-telephone device (18) in the case of a recognition of an assignment signal (11, 11') for the assignment of one of several mobile-telephone devices (17) of the same transmission channel to a subsequent transmission block (13, 13') of the transmission channel, comprising the following procedural stages:
- transmission of a transmission block (12, 12') with an assignment signal (11, 11'),
- reception of the assignment signal (11, 11') by the mobile-telephone device under test (26),
- determination by the mobile-telephone device under test (26) of whether the subsequent transmission block (13, 13') has been assigned to it by the assignment signal (11, 11') received,
- transmission by the mobile-telephone device under test (26) of a message signal in the subsequent transmission block (13, 13'), if an assignment has been established,
- reception of the message signal from the mobile-telephone device under test (26) in the corresponding transmission block (13, 13'),
- checking, after an assignment signal (11, 11'), which addresses the mobile-telephone device under test (26), whether a message signal from the mobile telephone device under test (26) has been received in the subsequent transmission block (13, 13'),
- determination of the number of un-recognised assignment signals (11, 11') addressing the mobile-telephone device under test (26),
**characterised in that**
the assignment signal (11, 11') to be transmitted is selected from an assignment signal addressing the mobile-telephone device under test (26) and at least one further assignment signal addressing another mobile-telephone device of the same transmission signal.

2. Method according to claim 1
**characterised in that**
a first error rate is determined from the number of un-recognised assignment signals addressing the mobile-telephone device under test (26).

3. Method according claim 1 or 2,
**characterised in that**
the number of assignment signals incorrectly recognised by the mobile-telephone device (26) as an assignment, which address other mobile-telephone devices of the same transmission channel, is determined.

4. Method according to claim 3,
**characterised in that**
a second error rate is determined from the number of assignment signals incorrectly recognised as an assignment, which address other mobile-telephone devices (17) of the same transmission channel.

5. Method according to claim 1,
**characterised in that**
the number of assignment signals incorrectly recognised by the mobile-telephone device under test (26) as an assignment, which address other mobile-telephone devices (17) of the same transmission channel, is determined and
that a first error rate is determined from the number of un-recognised assignment signals addressing the mobile-telephone device under test (26), and a second error rate is determined from the number of assignment signals incorrectly recognised as an assignment.

6. Method according to any one of claims 1 to 5,
**characterised in that**
the assignment signal for the assignment of a mobile-telephone device (17) to a subsequent transmission block is selected from the assignment signals of all mobile-telephone devices (17), which use the same transmission channel.

7. Method according to any one of claims 1 to 6,
**characterised in that**
the number of transmitted assignment signals, which address the mobile-telephone device under test (26), is in a determinable ratio to the total number of assignment signals (11, 11') transmitted.

8. Method according to any one of claims 1 to 7,
**characterised in that**
the selection of the assignment signal (11') relating to the next transmission block takes place dependent upon at least the last, previously-transmitted assignment signal (11).

9. Tester for determining an error rate of a mobile-telephone device (26) in the case of a recognition of an assignment signal for the assignment of one of several mobile-telephone devices (18) of the same transmission channel to a subsequent transmission block of the transmission channel, wherein the tester (20) comprises:
a transmitter device (21.1) for the transmission of transmission blocks (12, 12') with an assignment signal (11, 11'),
a receiver device (21.2) for the reception of message signals transmitted in the subsequent transmission blocks (13, 13') by the mobile-telephone device under test (26),
an evaluation device (23) for determining respectively the number of transmission blocks following an assignment signal which addresses the mobile-telephone device under test (26), in which the mobile-telephone device under test (26) does not transmit a message signal,
**characterised by**
a selection device (24) for selecting the assignment signals (11, 11') to be transmitted from at least the assignment signal addressing the mobile-telephone device under test (26) and one further assignment signal addressing another mobile-telephone device (17) of the same transmission channel.

10. Tester according to claim 9,
**characterised in that**
the evaluation device (23) comprises means (23.1) for determining a first error rate from the number of un-recognised assignment signals (11, 11') addressing the mobile-telephone device (26) under test.

11. Tester according to claim 9 or 10,
**characterised in that**
the evaluation device (23) comprises means (23.1) for determining the number of assignment signals (11, 11') incorrectly recognised by the mobile-telephone device under test (26) as an assignment, which address other mobile-telephone devices (17) of the same transmission channel.

12. Tester according to claim 11,
**characterised in that**
the evaluation device (23) comprises means (23.1) for determining a second error rate from the number of assignment signals incorrectly recognised as an assignment, which address other mobile-telephone devices (17) of the same transmission channel.

13. Tester according to any one of claims 9 to 12,
**characterised in that**
the selection device (24) is provided for selecting the assignment signals (11, 11') to be transmitted from the assignment signals of all mobile-telephone devices (17) of the same transmission channel.

14. Tester according to any one of claims 9 to 13,
**characterised in that**
the ratio of the transmitted assignment signals, which address the mobile-telephone device under test (26), to the total number of transmitted assignment signals (11, 11') can be determined via the selection device (24).

15. Tester according to any one of claims 9 to 14,
**characterised in that**
the assignment signal (11') relating to the next transmission block (13') can be determined via the selection device (24) dependent upon at least the last, previously-transmitted assignment signal (11).

## Revendications

1. Procédé pour déterminer un taux d'erreur d'un appareil de téléphonie mobile (18) lors de la reconnaissance d'un signal d'affectation (11, 11') pour affecter un même canal de transmission de plusieurs appareils de téléphonie mobile (17) à un bloc de transmission suivant (13, 13') du canal de transmission comportant les étapes de procédé suivantes :
- l'envoi d'un bloc de transmission (12, 12') avec un signal d'affectation (11, 11'),
- la réception du signal d'affectation (11, 11') par l'appareil de téléphonie mobile à tester (26),
- la détection par l'appareil de téléphonie mobile à tester (26), si le bloc de transmission suivant (13, 13') lui est affecté par le signal d'affectation reçu (11, 11'),
- l'envoi d'un signal d'information dans le bloc de transmission suivant (13, 13') par l'appareil de téléphonie mobile à tester (26), lors d'une affectation déterminée,
- la réception du signal d'information de l'appareil de téléphonie mobile à tester (26) dans le bloc de transmission correspondant (13, 13'),
- la vérification, si un signal d'information dans le bloc de transmission suivant (13, 13') est reçu par l'appareil de téléphonie mobile à tester (26) après un signal d'affectation (11, 11'), qui adresse l'appareil de téléphonie mobile à tester (26),
- la détermination du nombre de signaux d'affectation (11, 11') non reconnus adressant l'appareil de téléphonie mobile à tester, **caractérisé en ce que** le signal d'affectation à envoyer (11, 11') est sélectionné parmi un signal d'affectation adressant l'appareil de téléphonie mobile à tester (26) et au moins un autre signal d'affectation adressant un autre appareil de téléphonie mobile du même signal de transmission.

2. Procédé selon la revendication 1, **caractérisé en ce que**
un premier taux d'erreur est déterminé à partir du nombre de signaux d'affectation non reconnus adressant un appareil de téléphonie mobile à tester (26).

3. Procédé selon la revendication 1 ou 2, **caractérisé en ce que** le nombre de signaux d'affectation reconnus comme faux en tant qu'affectation par l'appareil de téléphonie mobile à tester (26) et qui adressent les autres appareils de téléphonie mobile du même canal de transmission, est déterminé.

4. Procédé selon la revendication 3, **caractérisé en ce que**
un second taux d'erreur est déterminé à partir du nombre de signaux d'affectation reconnus comme faux en tant qu'affectation et qui adressent les autres appareils de téléphonie mobile (17) du même canal de transmission.

5. Procédé selon la revendication 1, **caractérisé en ce que** le nombre de signaux d'affectation reconnus comme faux en tant qu'affectation par l'appareil de téléphonie mobile à tester (26) et qui adressent les autres appareils de téléphonie mobile (17) du même canal de transmission, est déterminé et
**en ce qu'**un premier taux d'erreur est déterminé à partir du nombre de signaux d'affectation non reconnus adressant l'appareil de téléphonie mobile à tester (26) et un second taux d'erreur est déterminé à partir du nombre de signaux d'affectation reconnus comme faux en tant qu'affectation.

6. Procédé selon l'une des revendications 1 à 5, **caractérisé en ce que**
le signal d'affectation est sélectionné en vue de l'affectation d'un appareil de téléphonie mobile (17) à un bloc de transmission suivant à partir des signaux d'affectation de tous les appareils de téléphonie mobile (17), qui utilisent le même canal de transmission.

7. Procédé selon l'une des revendications 1 à 6, **caractérisé en ce que**
le nombre de signaux d'affectation envoyés, qui adressent l'appareil de téléphonie mobile à tester (26), est en rapport définissable avec le nombre de signaux d'affectation envoyés en totalité (11, 11').

8. Procédé selon l'une des revendications 1 à 7, **caractérisé en ce que**
la sélection du signal d'affectation (11') concernant le bloc de transmission suivant est effectuée selon au moins le dernier signal d'affectation envoyé précédemment.

9. Testeur en vue de déterminer un taux d'erreur d'un appareil de téléphonie mobile (26) lors de la reconnaissance d'un signal d'affectation pour affecter l'un de plusieurs appareils de téléphonie mobile (18) du même canal de transmission à un bloc de transmission suivant du canal de transmission, dans lequel le testeur (20) comprend
un dispositif d'envoi (21.1) pour envoyer des blocs de transmission (12, 12') avec un signal d'affectation (11, 11'),
un dispositif de réception (21.2) pour recevoir des signaux d'information envoyés dans les blocs de transmission suivants (13, 13') par l'appareil de téléphonie mobile à tester (26),
un dispositif d'évaluation (23) pour déterminer le nombre de ces blocs de transmission suivant respectivement un signal d'affectation, qui adressent l'appareil de téléphonie mobile à tester (26), blocs dans lesquels l'appareil de téléphonie mobile à tester (26) n'envoie aucun signal d'information et **caractérisé par**
un dispositif de sélection (24) pour sélectionner les signaux d'affectation à envoyer (11, 11') à partir d'au moins le signal d'affectation adressant l'appareil de téléphonie mobile à tester (26) et d'un autre signal d'affectation adressant un autre appareil de téléphonie mobile (17) du même canal de transmission.

10. Testeur selon la revendication 9, **caractérisé en ce que**
le dispositif d'évaluation (23) comprend des moyens (23.1) pour déterminer un premier taux d'erreur à partir du nombre de signaux d'affectation (11, 11') non reconnus adressant l'appareil de téléphonie mobile à tester (26).

11. Testeur selon la revendication 9 ou 10, **caractérisé en ce que**
le dispositif d'évaluation (23) comprend des moyens (23.1) pour déterminer le nombre de signaux d'affectation (11, 11') reconnus faux en tant qu'affectation par l'appareil de téléphonie mobile à tester (26) et qui adressent d'autres appareils de téléphonie mobile (17) du même canal de transmission.

12. Testeur selon la revendication 11, **caractérisé en ce que**
le dispositif d'évaluation (23) comprend des moyens (23.1) pour déterminer un second taux d'erreur à partir du nombre de signaux d'affectation reconnus comme faux en tant qu'affectation, qui adressent d'autres appareils de téléphonie mobile (17) du même canal de transmission.

13. Testeur selon l'une des revendications 9 à 12, **caractérisé en ce que**
le dispositif de sélection (24) est prévu pour sélectionner les signaux d'affectation à envoyer (11, 11') parmi les signaux d'affectation de tous les appareils de téléphonie mobile (17) du même canal de transmission.

14. Testeur selon l'une des revendications 9 à 13, **caractérisé en ce que**
le rapport des signaux d'affectation envoyés, qui adressent l'appareil de téléphonie mobile à tester, peut être défini en tant que signaux d'affectation envoyés en totalité (11, 11') par l'intermédiaire du dispositif de sélection (24).

15. Testeur selon l'une des revendications 9 à 14, **caractérisé en ce que**
le signal d'affectation (11') concernant le bloc de transmission suivant (13') peut être déterminé conformément au moins au dernier signal d'affectation envoyé précédemment (11) par l'intermédiaire du dispositif de sélection (24).
